# EUROPEAN PATENT APPLICATION

(11) **EP 2 034 675 A2**
(43) Date of publication of application: **11.03.2009**
(21) Application number: 08162418.1
(22) Date of filing: 14.08.2008
(51) Int. Cl.: H04L 12/56

(54) **Communication system, communication apparatus and communication control method**

(30) Priority: 14.08.2007 JP 2007211503
(71) Applicant: Canon Kabushiki Kaisha, Tokyo 146-8501 (JP)
(72) Inventor: Kanda, Tetsuo, Ohta-ku, Tokyo (JP); Eguchi, Tadashi, Ohta-ku, Tokyo (JP)
(74) Representative: Garner, Jonathan Charles Stapleton

(57) **Abstract**

To adjust reception sensitivity suitable for avoiding cross-interference with another wireless communication system with an easy method. In order to achieve the above object, a control station that controls wireless communication of a dependent station determines whether or not a beacon received by the dependent station includes a beacon transmitted by a wireless terminal that is operated in asynchronization with the control station (step S1204), and continues to transmit an instruction to lower the reception sensitivity of the dependent station to the dependent station until the beacon received by the dependent station does not include a beacon transmitted by the asynchronous wireless terminal (step S1205).

## Description

### BACKGROUND OF THE INVENTION

### Field of the Invention

The present invention relates to a technique for controlling communication within a network.

### Description of the Related Art

A scheme that wirelessly connects devices located in close proximity (about 10 meters) to one another is called a "WPAN", and is defined separately from WLAN.

Currently, as a standard for WPAN that uses a UWB (Ultra Wide-Band) communication scheme, ECMA International, which is a standards development organization, has published ECMA-368 which provides PHY and MAC layer specifications. Wireless USB and like standards are defined as protocols which operate at communication layers above this ECMA-368 standard.

In the UWB communication scheme, the timing at which each wireless terminal accesses another wireless terminal is controlled to prevent a "collision" between wireless frames that occurs when a plurality of wireless terminals transmit wireless frames simultaneously. Media Access Control (MAC) protocol is the protocol that defines this control scheme, and performs this control through the transmission/reception of beacons.

The UWB communication scheme, however, is problematic in that "interference" occurs between wireless communication systems due to the shared use of frequencies.

Adjusting the reception sensitivity of the wireless terminals of each wireless communication system is effective at suppressing the occurrence of "interference" between wireless communication systems, and various methods for adjusting the reception sensitivity have heretofore been proposed.

For example, Japanese Patent Laid-Open No. 2000-036981 proposes a method in which reception sensitivity is adjusted based on an interference signal such that a wireless terminal detects only wireless communication signals of the wireless base station of a wireless communication network to which the wireless terminal belongs.

Another method has been proposed in Japanese Patent Laid-Open No. 2006-014047, in which a radio wave interference measurement test is performed, and the reception sensitivity is adjusted based on the measured reception field intensity.

However, according to Japanese Patent Laid-Open No. 2000-036981, wireless communication signals from wireless terminals other than the wireless base station (i.e., wireless terminals that do not cause interference) that belong to the same wireless communication network are rejected. For this reason, there is a possibility that the reception sensitivity may be set to a very low level for a wireless terminal that belongs to the same wireless communication network depending on the location of the wireless terminal.

Generally speaking, the reception sensitivity is set to the highest degree possible within the range that does not cause interference so as to obtain communication stability. It is therefore not appropriate to set the reception sensitivity to a level lower than necessary.

On the other hand, according to the method of adjusting the reception sensitivity described in Japanese Patent Laid-Open No. 2006-014047, it is possible to set the reception sensitivity suitable for each wireless terminal based on the results of the interference measurement. However, this method is problematic in that all wireless terminals have to be simultaneously subjected to the interference measurement for adjustment, which requires considerable effort to effect the reception sensitivity adjustment.

### SUMMARY OF THE INVENTION

The present invention in its first aspect provides a communication system as specified in claim 1.

The present invention in its second aspect provides a communication apparatus as specified in claims 2 to 7.

The present invention in its third aspect provides a communication control method as specified in claim 8.

The present invention in its fourth aspect provides a program as specified in claim 9.

According to the present invention, it is possible to reduce cross-interference with other networks.

Further features of the present invention will become apparent from the following description of exemplary embodiments with reference to the attached drawings.

### BRIEF DESCRIPTION OF THE DRAWINGS

The accompanying drawings, which are incorporated in and constitute a part of the specification, illustrate embodiments of the invention and, together with the description, serve to explain the principles of the invention.

FIG. 1 is a diagram illustrating the overall configuration of a wireless superframe that is defined by the MAC protocol.

FIG. 2 is a diagram illustrating a configuration of a beacon period included in a wireless frame.

FIG. 3 is a schematic diagram illustrating a configuration of a beacon that is transmitted in accordance with the MAC protocol.

FIG. 4 is a diagram illustrating a configuration of wireless communication networks formed by wireless terminals according to Embodiment 1 of the present invention.

FIG. 5 is a diagram illustrating timings according to the MAC protocol.

FIG. 6 is a diagram illustrating an example of beacon setting details.

FIG. 7 is a diagram illustrating an example of the internal configuration of a control station.

FIG. 8 is a diagram illustrating an example of the internal configuration of a MAC protocol processing unit 702 included in a Wireless USB host 401.

FIG. 9 is a diagram illustrating an example of the internal configuration of a dependent station.

FIG. 10 is a state transition diagram illustrating a state transition of the Wireless USB host 401 when a Wireless USB device 402 is on standby.

FIGS. 11A and 11B are diagrams used to illustrate interference between wireless communication networks 400 and 410.

FIG. 12 is a flowchart of a reception sensitivity control process executed by the Wireless USB host 401.

FIG. 13 is a diagram illustrating the communication area of a Wireless USB device 402 after the reception sensitivity control process is performed.

### DESCRIPTION OF THE EMBODIMENTS

Preferred embodiments of the present invention will now be described in detail in accordance with the accompanying drawings.

The following descriptions describe the case where the Wireless USB standard is used as an example of a wireless communication network that uses UWB. It should be noted, however, that the present invention is not limited thereto, and may be achieved with other applications.

Also, in the following descriptions, "control station" refers to a terminal that controls communication when a wireless communication network is formed in a wireless communication system. In the case of the Wireless USB standard, the control station is the Wireless USB host. Likewise, "dependent station" refers to a terminal that performs communication under the control of the control station of a wireless communication system. In the case of the Wireless USB standard, the dependent station is a Wireless USB device. Control stations and dependent stations are collectively referred to as "wireless terminals".

### [Embodiment 1]

### <1. Description of Wireless Frames in UWB MAC Protocol>

A configuration of a wireless frame that is defined by the MAC protocol of the UWB communication scheme will be described first.

### (1) Overall Configuration of Wireless Superframe

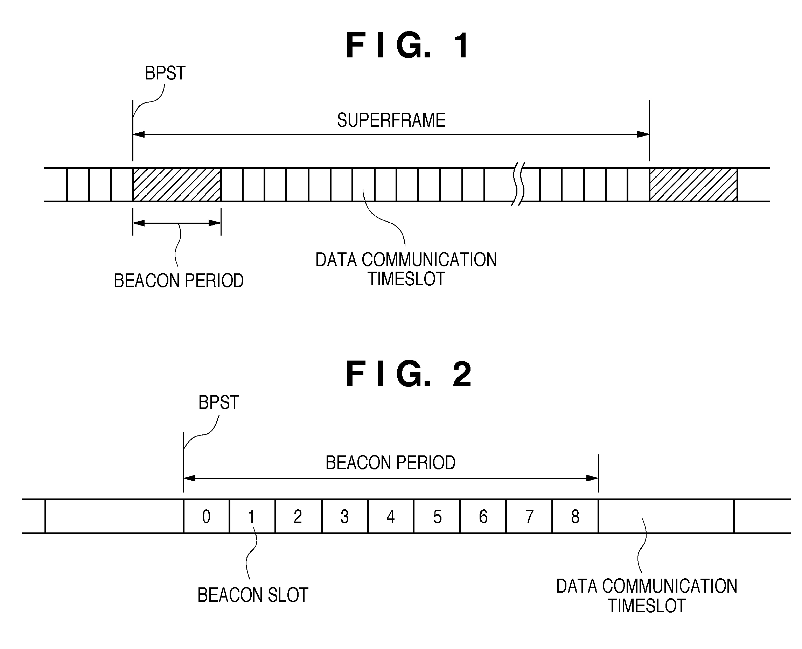

FIG. 1 is a diagram illustrating the overall configuration of a wireless superframe that is defined by the MAC protocol. According to the MAC protocol, access timing between wireless terminals is controlled based on a superframe having a fixed time length that is repeatedly generated.

The time length of a superframe is about 65 milliseconds, and this superframe is divided equally into 256 timeslots. Which of these timeslots can be used as data communication timeslots is determined through transmission/reception of control signals called "beacons" between wireless terminals.

At least one timeslot located in the beginning of a superframe is an allocated region that the wireless terminal uses to transmit the beacon, and this region is called a "beacon period".

### (2) Configuration of Beacon Period Included in Wireless Superframe.

FIG. 2 is a diagram illustrating a configuration of a beacon period included in a wireless superframe. A beacon period includes a plurality of beacon slots having a length of about 85 microseconds. The length of a beacon period depends on the number of wireless terminals, and is variable.

The start time of a beacon period is called "BPST" (Beacon Period Start Time). This BPST can also be considered the start time of the superframe.

A plurality of wireless terminals that form a single wireless communication network share the same BPST that corresponds to the start time of the superframe, and thus the beacons that are transmitted by each wireless terminal are configured as follows.

### (3) Configuration of Beacon

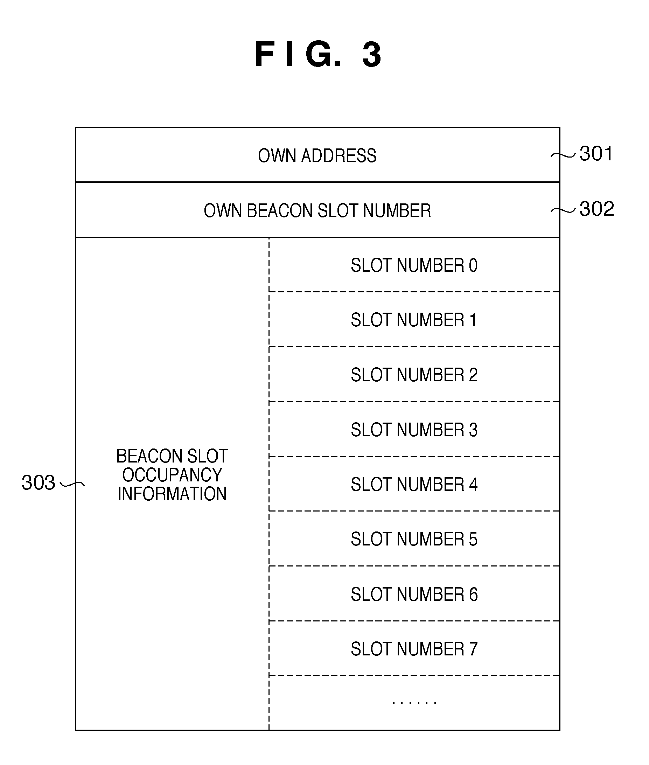

FIG. 3 is a schematic diagram illustrating a configuration of a beacon that is transmitted in accordance with the MAC protocol. As shown in FIG. 3, each wireless terminal includes, in its own beacon, its own address and its own beacon slot number that is used to transmit the beacon (301 and 302).

Another wireless terminal that has received a beacon analyzes the content of the beacon, and can calculate the BPST that is recognized by the wireless terminal that has transmitted the beacon based on the time point at which the beacon was actually received and the beacon slot number (302) included in the beacon.

As described above, because a wireless terminal can determine the BPST that is recognized by another wireless terminal, by setting the BPST as a start reference point of the superframe, they can access in synchronization with each other.

Each wireless terminal further includes, in its own beacon, beacon slot occupancy information 303 in which the addresses of other wireless terminals recognized by the wireless terminal are stored on a slot-number-by-slot-number basis. With this, collisions between beacon slots can be avoided.

In the example shown in FIG. 3, only the items that are necessary to describe the present embodiment are shown in the information included in the beacon. For this reason, FIG. 3 is different from the beacon frame format that is actually defined in the ECMA-368 standard, but this does not intend to exclude information other than those shown in FIG. 3.

### <2. Configuration of Wireless Communication System>

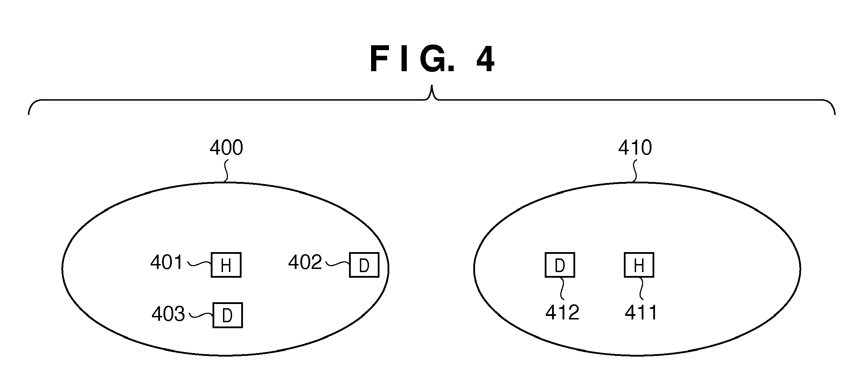

FIG. 4 is a diagram illustrating a configuration of wireless communication networks formed by wireless terminals according to Embodiment 1 of the present invention. The wireless terminals shown in FIG. 4 form wireless communication networks 400 and 410 with UWB Wireless USB, respectively.

As shown in FIG. 4, reference numeral 401 denotes a Wireless USB host (control station), and reference numerals 402 and 403 denote Wireless USB devices (dependent stations). Together they form the wireless communication network 400. Similarly, reference numeral 411 denotes a Wireless USB host (control station), and reference numeral 412 denotes a Wireless USB device (dependent station). Together they form another wireless communication network 410, distinct from the wireless communication network 400.

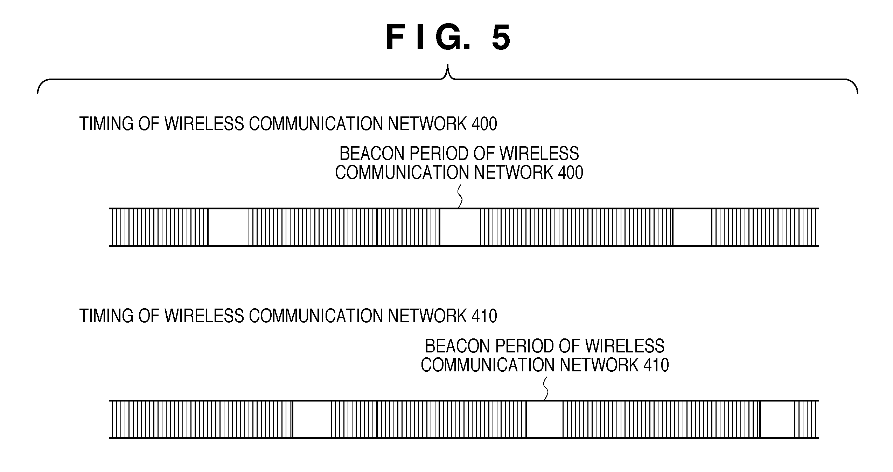

The wireless communication networks 400 and 410 are each configured as follows. First, the wireless communication networks 400 and 410 have BPSTs and beacon periods that are set at different time points as shown in FIG. 5 in their superframes. Here, such a relationship is referred to as "asynchronous", and data communication is not possible between asynchronous wireless terminals.

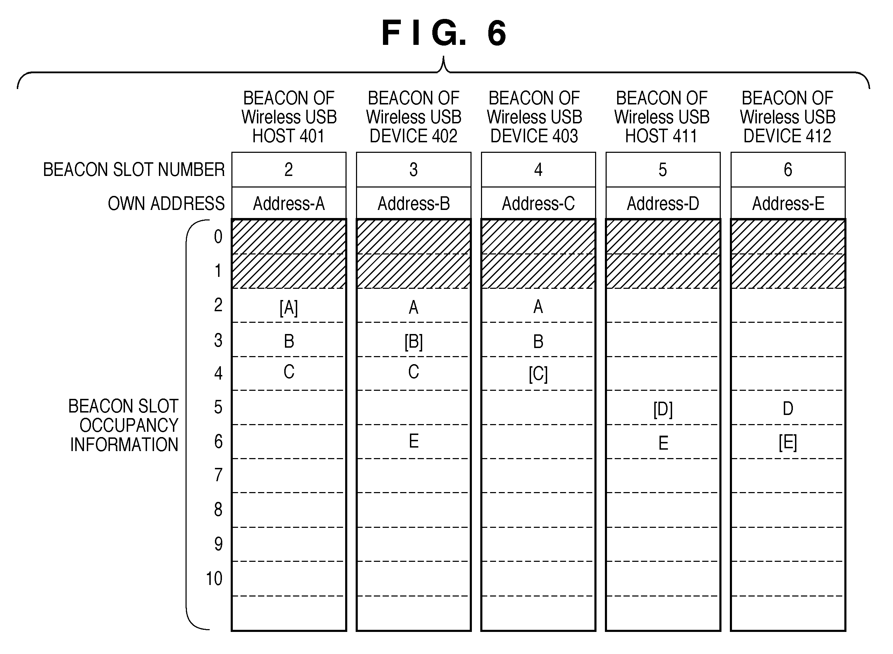

For the beacon sent from each wireless terminal, settings as shown in FIG. 6 are made. Specifically, the Wireless USB hosts and the Wireless USB devices (401, 402, 403, 411 and 412) are respectively assigned the second through the sixth beacon slots.

Note that the zeroth and first beacon slots are not used. This is because, according to the ECMA-368 standard, these two beacon slots are used for another purpose, which is to optimize the beacon period length. It should be noted, however, this is not essentially related to the present invention.

The Wireless USB host 401 receives the beacons of the Wireless USB devices 402 and 403, so that, as shown in FIG. 6, the addresses of the Wireless USB devices 402 and 403 are stored in slot numbers 3 and 4, respectively, as the beacon slot occupancy information. Further, the Wireless USB host 401 that sends the beacon stores its own address in slot number 2, and the fields that correspond to the other slot numbers are left blank. Basically, the same settings are made for the beacon slot occupancy information of the Wireless USB device 403.

Likewise, the Wireless USB host 411 receives the beacon of the Wireless USB device 412, so that the address of the Wireless USB device 412 is stored in slot number 6 as the beacon slot occupancy information. Further, the Wireless USB host 411 that sends the beacon stores its own address in slot number 5, and the fields that correspond to the other slot numbers are left blank. Basically, the same settings are made for the beacon slot occupancy information of the Wireless USB device 412.

In the present embodiment, it is assumed that the Wireless USB device 402 receives the beacons of the Wireless USB host 401, the Wireless USB device 403, and the Wireless USB device 412. Accordingly, the addresses of these devices are stored in slot numbers 2, 4 and 6, respectively, as the beacon slot occupancy information. Further, the Wireless USB device 402 that sends the beacon stores its own address in slot number 3, and the fields that correspond to the other slot numbers are blank.

### <3. Internal Configuration of Control Station>

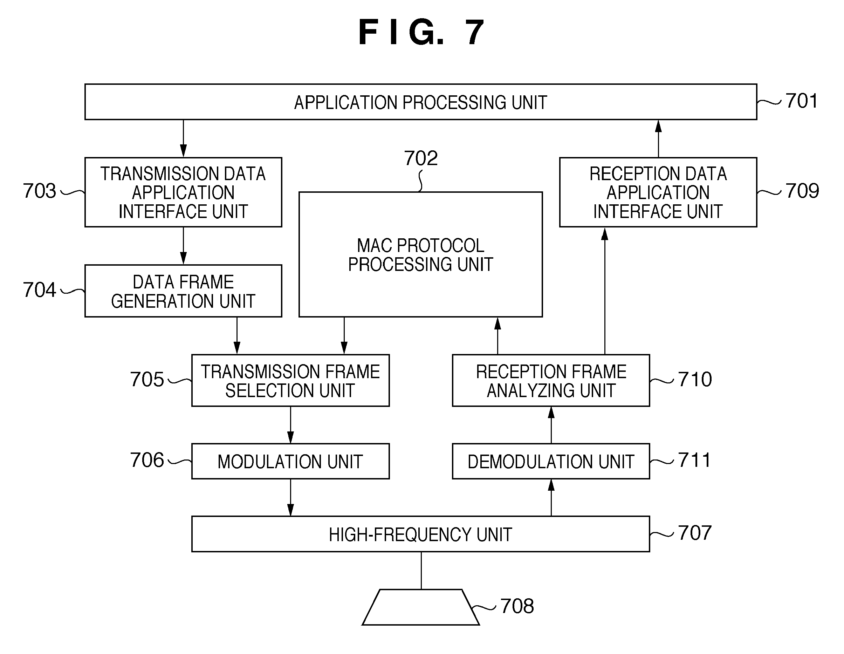

FIG. 7 is a diagram illustrating an example of the internal configuration of a control station. The operation of each unit of a control station will be briefly explained with reference to FIG. 7. Here, the case where the control station is the Wireless USB host 401 is described, but the Wireless USB host 411 also has the same internal configuration.

The Wireless USB host 401 transmits the following types of wireless frames.
- Data frame for transmitting application data
- Beacon frame for processing a beacon protocol
- Request frame that is used to control the Wireless USB device 402 (or 403)
Of these, the data frame is transmitted/received according to the following procedure. Specifically, application data being transmitted is delivered from an application processing unit 701 to a data frame generation unit 704 through a transmission data application interface unit 703. Next, the application data is converted to a data frame having a format suitable for wireless communication by the data frame generation unit 704.

Then, the data frame is selected by a transmission frame selection unit 705, is converted to an analog signal by a modulation unit 706, is further converted to a wireless signal by a high-frequency unit 707, and is finally transmitted to the Wireless USB device 402 through an antenna 708.

On the other hand, a data frame that is received by the antenna 708 and is converted to a baseband signal or digital signal by the high-frequency unit 707, is demodulated by a demodulation unit 711, and is transmitted to a reception frame analyzing unit 710.

If the reception frame analyzing unit 710 determines that the input wireless frame is a data frame, the data frame is converted to a format appropriate as application data. Then, the application data is transferred to the application processing unit 701 through a reception data application interface unit 709.

When transmitting/receiving a beacon frame or request frame, a MAC protocol processing unit 702 is used.

The MAC protocol processing unit 702 includes a function for transmitting and receiving beacon frames for executing a beacon protocol. The MAC protocol processing unit 702 further includes a function for generating a request frame for controlling the Wireless USB device 402, and a function for analyzing a response frame that is received from the Wireless USB device 402 in response to a request frame. Accordingly, if it is determined by the reception frame analyzing unit 710 that the input wireless frame is a beacon frame or request frame, the received frame is transferred to the MAC protocol processing unit 702. The aforementioned functions of the MAC protocol processing unit 702 will be described below.

### <4. Internal Configuration of MAC Protocol Processing Unit>

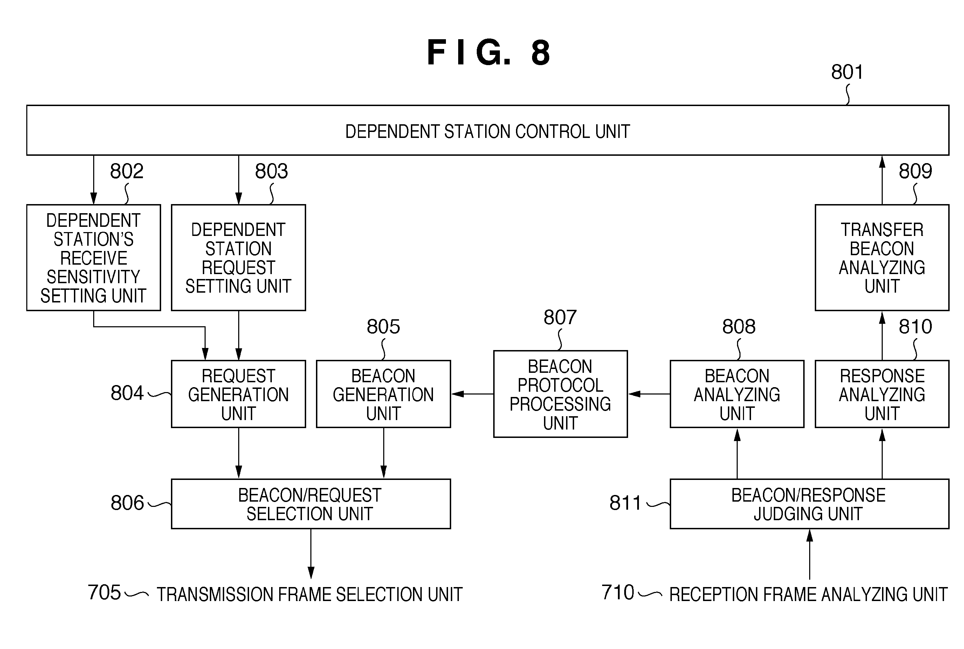

FIG. 8 is a diagram illustrating an example of the internal configuration of the MAC protocol processing unit 702 included in the Wireless USB host 401. There are roughly two functions that the MAC protocol processing unit 702 can achieve.
- A beacon frame transmission/reception function that is executed during communication with another dependent station that is already connected (the Wireless USB device 403)
- A function that is executed during communication with another dependent station that is on standby and will be connected (the Wireless USB device 402)
As used herein, "standby" refers to a transition state of a period during which a newly activated dependent station (the Wireless USB device 402 in this case) is connected to a control station (the Wireless USB host 401 in this case).

### (1) Function in Connected State

If the Wireless USB host 401 receives a beacon that is transmitted from the Wireless USB device 403, the received beacon is transmitted from a beacon/response judging unit 811 to a beacon analyzing unit 808.

The beacon analyzing unit 808 analyzes the content of the received beacon, and transmits the result of the analysis to a beacon protocol processing unit 807. The beacon protocol processing unit 807 determines a parameter necessary to generate a beacon that will be transmitted from the Wireless USB host 401 according to the beacon protocol based on the content and timing of the received beacon.

The parameter determined by the beacon protocol processing unit 807 is transmitted to a beacon generation unit 805, where a beacon that will be transmitted from the Wireless USB host 401 is generated. The generated beacon is transmitted to a beacon/request selection unit 806, and then finally to the Wireless USB device 403 from the antenna 708.

### (2) Function in Standby State

When establishing a communication with a dependent station on standby (the Wireless USB device 402), a dependent station control unit 801 activates. The dependent station control unit 801 performs processing to control the operation (beacon capture, beacon transfer, setting of reception sensitivity) of the Wireless USB device 402.

With an instruction from the dependent station control unit 801, a dependent station request setting unit 803 sets a request that needs to be transmitted to a dependent station (the Wireless USB device 402 in this case). A dependent station's reception sensitivity setting unit 802 determines the reception sensitivity at which the dependent station (the Wireless USB device 402 in this case) receives the request.

After the process described above, a request generation unit 804 generates a request frame that is used to provide an instruction, such as beacon capture, beacon transfer or setting of reception sensitivity, to the Wireless USB device 402.

A response frame that the Wireless USB host 401 receives as a response to the request frame from the Wireless USB device 402 is analyzed by a response analyzing unit 810.

The dependent station control unit 801 transmits instructions to the dependent station's reception sensitivity setting unit 802 and the dependent station request setting unit 803 based on the results of the analysis performed by the response analyzing unit 810.

### <5. Internal Configuration of Dependent Station>

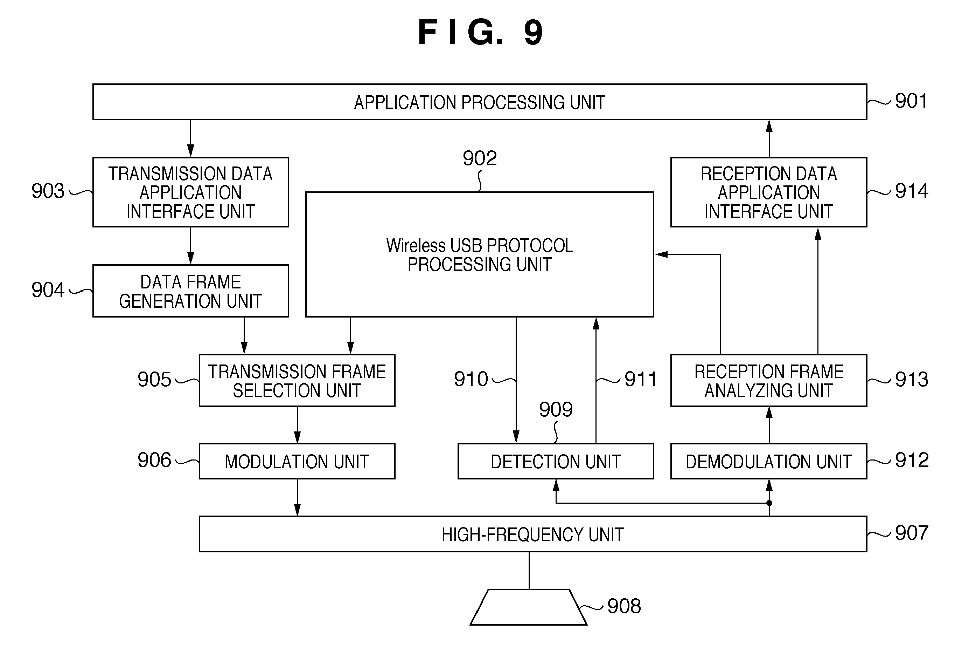

FIG. 9 is a diagram illustrating an example of the internal configuration of a dependent station. The operation of each unit of a dependent station will be briefly explained with reference to FIG. 9. Here, the case where the dependent station is the Wireless USB device 402 is described, but the Wireless USB devices 403 and 412 also have the same internal configuration.

Similar to the control station, in the dependent station, a data frame is transmitted/received according to the following procedure. Specifically, application data being transmitted is delivered from an application processing unit 901 to a data frame generation unit 904 through a transmission data application interface unit 903. Next, the application data is converted to a data frame having a format suitable for wireless communication by the data frame generation unit 904.

Then, the data frame is selected by a transmission frame selection unit 905, is converted to an analog signal by a modulation unit 906, is further converted to a wireless signal by a high-frequency unit 907, and is finally transmitted to the Wireless USB host 401 through an antenna 908.

On the other hand, a data frame that is received by the antenna 908 and is converted to a baseband signal or digital signal by the high-frequency unit 907 is demodulated by a demodulation unit 912, and is transmitted to a reception frame analyzing unit 913.

If the reception frame analyzing unit 913 determines that the input wireless frame is a data frame, the data frame is converted to a format appropriate as application data. Then, the application data is transferred to the application processing unit 901 through a reception data application interface unit 914.

If it is determined by the reception-frame analyzing unit 913 that the input wireless frame is a beacon frame or request frame, that frame is transferred to a Wireless USB protocol processing unit 902.

The Wireless USB protocol processing unit 902 analyzes a beacon frame, or executes processing requested by a request frame (e.g., processing that causes a detection unit 909 to set the reception sensitivity using a reception sensitivity setting signal 910).

The Wireless USB device 402 includes the detection unit 909, so that the reception power level of a reception signal of an intermediate frequency band received from the high-frequency unit 907 can be determined.

The obtained result is transmitted to the Wireless USB protocol processing unit 902 in the form of a frame detection signal 911.

In the present embodiment, the detection unit 909 receives a signal of an intermediate frequency band as a reception signal from the high-frequency unit 907 for detection, but depending on the embodiment, a configuration may be employed in which the detection unit 909 detects a reception signal of a baseband frequency band or a reception signal converted to digital data.

### <6. State Transition of Control Station>

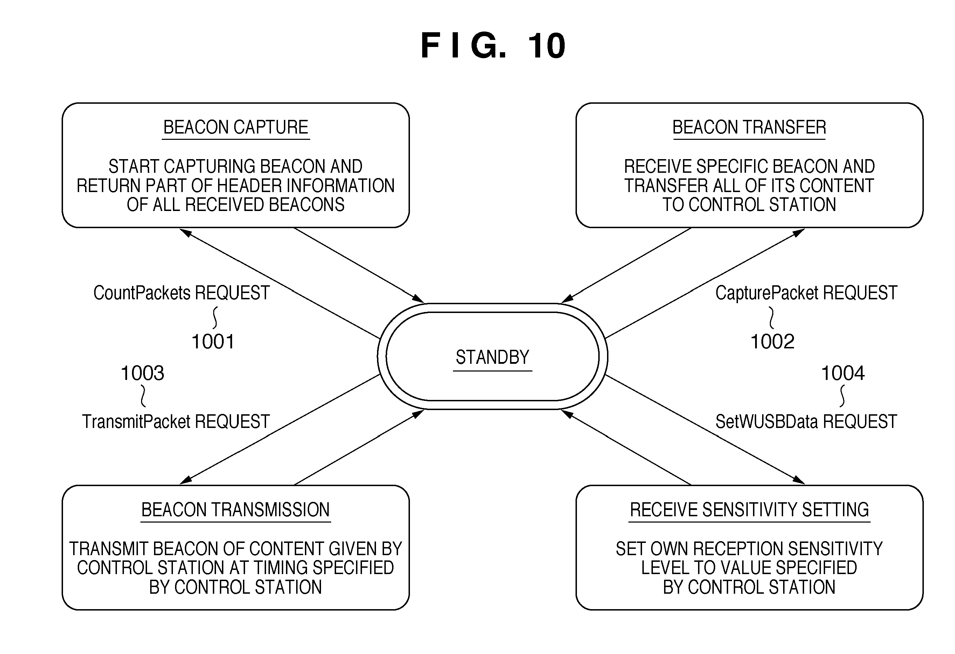

FIG. 10 is a state transition diagram illustrating a state transition of the Wireless USB host 401 when the Wireless USB device 402 is on standby. To put it differently, FIG. 10 shows a control process performed when the Wireless USB host 401 controls the newly activated Wireless USB device 402.

The control of the Wireless USB device 402 is executed by transmitting a request from the Wireless USB host 401 to the Wireless USB device 402. The Wireless USB device 402 performs processing in accordance with this request, and notifies the Wireless USB host 401 of the results of the processing by transmitting a response corresponding to the request to the Wireless USB host 401. As shown in FIG. 10, the Wireless USB host 401 controls the Wireless USB device 402 that is on standby using four different types of requests.

Reference numeral 1001 denotes a CountPackets request. The CountPackets request is a request to capture a beacon. Upon receiving the CountPackets request from the Wireless USB host 401, the Wireless USB device 402 starts capturing a beacon.

Reference numeral 1002 denotes a CapturePacket request. The CapturePacket request is a request to transfer information regarding the received beacon. Upon receiving the CapturePacket request, the Wireless USB device 402 transfers information regarding a beacon specified by this request to the Wireless USB host 401 as a response. The beacon information contains all of the content of the received beacon, the timing at which the beacon was received, and the quality of the reception.

In other words, by using the CountPackets request and the CapturePacket request, the Wireless USB host 401 can be aware of information regarding the beacon received by the Wireless USB device 402.

Reference numeral 1003 denotes a TransmitPacket request. Upon receiving the TransmitPacket request from the Wireless USB host 401, the Wireless USB device 402 transmits a beacon having contents specified by this request at a specified timing. By using the TransmitPacket request, the Wireless USB host 401 can cause the Wireless USB device 402 to transmit a beacon.

Reference numeral 1004 denotes a SetWUSBData request. The Wireless USB device 402 receives a SetWUSBData request in which a parameter wValue is set to TransmitPower from the Wireless USB host 401. Then, the Wireless USB device 402 sets the reception sensitivity at which it receives the beacon to a value specified by this request frame.

In other words, by using the SetWUSBData request, the Wireless USB host 401 can control the reception sensitivity of the Wireless USB device 402.

### <7. Description of Interference between Wireless Communication Systems>

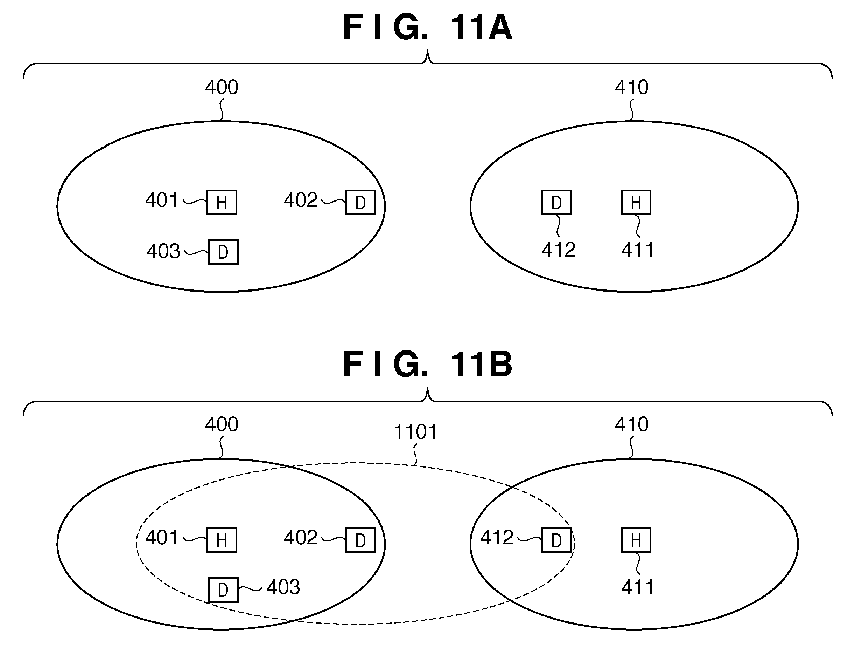

FIGS. 11A and 11B are diagrams used to illustrate interference between the wireless communication networks 400 and 410. In FIG. 11A, the Wireless USB device 402 is not activated. Accordingly, the Wireless USB device 402 and the Wireless USB device 412 do not communicate with each other, or their wireless frames do not collide. Further, in this state, they do not interfere with each other.

However, in this state, if the Wireless USB device 402 is activated, interference will occur between the wireless communication networks 400 and 410.

Upon being activated, the Wireless USB device 402 first detects whether or not there is a control station with which a connection should be established (the Wireless USB host 401 in this case) around the Wireless USB device 402 by capturing wireless frames.

If the Wireless USB device 402 receives a wireless frame that has been transmitted by the Wireless USB host 401, the Wireless USB device 402 determines the Wireless USB host 401 as the control station with which a connection should be established.

Upon making the determination, the Wireless USB device 402 connects to the Wireless USB host 401.

When a connection is established, the Wireless USB host 401 transmits a CountPackets request and a CapturePacket request to the Wireless USB device 402. Through this, the Wireless USB host 401 detects another Wireless USB device that is located in the surrounding environment of the Wireless USB device 402.

In this case, as shown in FIG. 11B, the Wireless USB device 412 is included in a reception range 1101 in which the Wireless USB device 402 can receive wireless frames. Accordingly, wireless frames, such as beacons, that are transmitted by the Wireless USB device 412 interfere with the Wireless USB device 402.

In particular, the Wireless USB device 412 transmits not only beacons, but also other wireless frames that are used for data communication, at the MAC protocol timing that is in synchronization with the wireless communication network 410. Accordingly, all of these wireless frames may interfere with the wireless communication network 400 to which the Wireless USB device 402 belongs.

In view of this, the Wireless USB host 401 according to the present embodiment controls the reception sensitivity of the activated Wireless USB device 402, whereby the influence of interference from the wireless communication network 410 is avoided. Hereinafter, a reception sensitivity control process flow, as performed by the Wireless USB host 401, will be described in detail.

### <8. Flow of Receive Sensitivity Control Process Performed by Control Station to Avoid Interference>

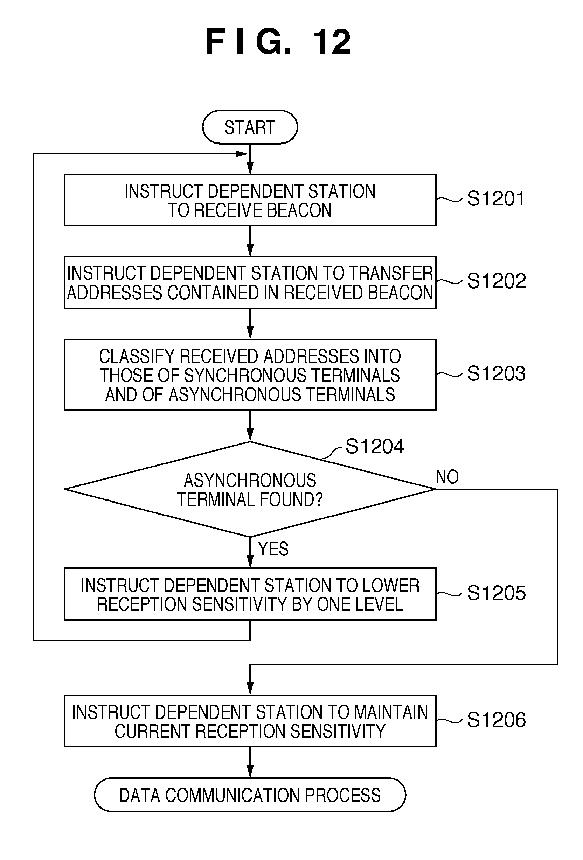

FIG. 12 is a flowchart of a reception sensitivity control process executed by the Wireless USB host 401 to prevent cross-interference with the wireless communication network 410 that is caused by the Wireless USB device 402.

Upon receiving a connection request from the Wireless USB device 402, the Wireless USB host 401 starts the reception sensitivity control process shown in FIG. 12.

In step S1201, the Wireless USB host 401 issues a beacon capture request to cause the Wireless USB device 402 to capture wireless frames for a predetermined period of time to the Wireless USB device 402.

This beacon capture request corresponds to the CountPackets request in the Wireless USB protocol, but is not particularly limited thereto as long as it is possible to cause the Wireless USB device 402 to capture beacons.

In step S1202, after a predetermined period of time specified by the beacon capture request has elapsed, the Wireless USB host 401 issues a beacon transfer request to the Wireless USB device 402.

This beacon transfer request corresponds to the CapturePacket request in the Wireless USB protocol, but is not particularly limited thereto. Other methods can be used as long as it is possible to instruct the Wireless USB device 402 to transfer the content of the received beacon to the Wireless USB host 401.

In response to the beacon transfer request, the Wireless USB device 402 transfers information regarding the beacon that it has received to the Wireless USB host 401 (transmission means). The Wireless USB host 401 receives the information (reception means). The beacon information includes the addresses of wireless terminals that have transmitted beacons.

In step S1203, the beacon information received from the Wireless USB device 402 is analyzed. In the state shown in FIG. 11B, the Wireless USB host 401 and the Wireless USB device 402 are included in the communication area of the Wireless USB device 402. The Wireless USB device 412 that belongs to the wireless communication network 410 is also included in that communication area.

Accordingly, the beacon information transmitted by the Wireless USB device 402 includes the addresses of the aforementioned three wireless terminals.

In step S1203, the addresses of these three wireless terminals are classified into those of the wireless terminal that is operated in synchronization with the Wireless USB host 401 and of the wireless terminal that is operated in asynchronization with the same. In order to determine whether or not the wireless terminals are operated in synchronization, BPST of each wireless terminal is first calculated based on the content of each beacon and the timing at which the beacon was actually received. If the BPST of a wireless terminal matches the BPST of the Wireless USB host 401, it can be determined that the wireless terminal is operated in synchronization with the Wireless USB host 401. Here, the Wireless USB host 401 and the Wireless USB device 402 are classified as synchronous terminals, and the Wireless USB device 412 is classified as an asynchronous terminal. Then, the Wireless USB host 401 controls the reception sensitivity of the Wireless USB device 402 such that the wireless terminal that is operated in asynchronization does not cause interference (or reduce the influence).

In step S1204, it is determined whether or not there is a wireless terminal that is operated in asynchronization with the Wireless USB host 401 based on the classification obtained in step S1203. If it is determined in step S1204 that there is a wireless terminal that is operated in asynchronization, the process advances to step S1205, where an instruction to change the reception sensitivity (to lower by one level) is made to the Wireless USB device 402. Specifically, a reception sensitivity setting request serving as the change instruction is transmitted to the Wireless USB device 402.

Upon receiving the reception sensitivity setting request, the Wireless USB device 402 lowers its reception sensitivity by one level. The Wireless USB host 401 returns to step S1201 to check whether or not interference from the Wireless USB device 412 has been avoided as a result of the reception sensitivity of the Wireless USB device 402 having been lowered by one level.

The reception sensitivity of the Wireless USB device 402 is lowered gradually by repeating the process ranging from steps S1201 to S1205 described above.

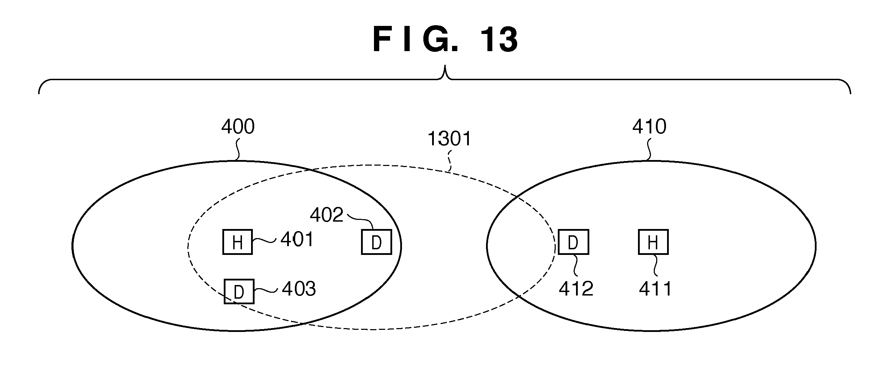

After that, if the Wireless USB device 412 moves out of the communication area of the Wireless USB device 402 (FIG. 13), the Wireless USB device 402 no longer receives the beacons transmitted from the Wireless USB device 412.

This means that the Wireless USB device 402 no longer receives interference from the asynchronous wireless terminal that belongs to the wireless communication network 410.

Accordingly, in step S1206, an instruction to maintain the current reception sensitivity is made to the Wireless USB device 402.

Thereafter, the Wireless USB device 402 is operated with that reception sensitivity, so that it can be operated as a wireless terminal of the wireless communication network 400 without receiving interference from the Wireless USB device 412.

As is clear from the foregoing, according to the present embodiment, the reception sensitivity of a dependent station can be adjusted to an optimal level such that the dependent station does not receive a wireless frame from an asynchronous wireless terminal that belongs to another wireless communication network.

Consequently, interference that the wireless terminal receives from another wireless communication network can be reduced to the highest degree possible, and it is therefore possible to avoid a decrease in throughput of the entire wireless communication network that is caused by interference.

### [Embodiment 2]

Embodiment 1 described above has discussed a configuration in which the control of the reception sensitivity of the Wireless USB device 402 is executed by gradually lowering the reception sensitivity, but the present invention is not intended to be limited thereto, and the reception sensitivity may be controlled by gradually increasing the reception sensitivity. In this case, the Wireless USB host 401 causes the Wireless USB device 402 to lower its reception sensitivity to a predetermined value before proceeding to step S1201 of FIG. 12. After that, the process ranging from steps S1201 to S1203 is performed. In step S1204, it is determined whether or not there is a wireless terminal that is operated in asynchronization with the Wireless USB host 401. If no wireless terminal that is operated in asynchronization is found, the Wireless USB host 401 transmits an instruction to raise the reception sensitivity by one level to the Wireless USB device 402. Then, the above process is repeated until a wireless terminal that is operated in asynchronization is found. If a wireless terminal that is operated in asynchronization is found, the Wireless USB host 401 transmits an instruction to lower the reception sensitivity by one level to the Wireless USB device 402, and then transmits an instruction to maintain the current reception sensitivity to the Wireless USB device 402.

### [Other Embodiments]

The present invention may be applied to a system configured of a plurality of devices (e.g., a host computer, an interface device, a reader, a printer, and so on) or to an apparatus configured of a single device (e.g., a copy machine, a facsimile device, and so on).

The object of the present invention is also achieved by supplying a recording medium, in which software program code that implements the functions of the foregoing embodiments is recorded, to a system or apparatus. In this case, the program code stored in the recording medium is loaded and executed by a computer (or CPU or MPU) of the system or apparatus, whereby the foregoing embodiments are achieved. In this case, the recording medium in which the program code is recorded falls within the scope of the present invention.

Examples of the recording medium that can be used to supply the program code include floppy® disks, hard disks, optical disks, magneto-optical disks, CD-ROMs, CD-Rs, magnetic tape, non-volatile memory cards, and ROMs.

Also, the invention is not limited to the case where the functions of the above-described embodiments are implemented by executing the program code loaded by a computer. The present invention also includes the case where, for example, the OS (operating system) running on the computer performs part or all of the actual processing based on the instructions of the program code, and the functions of the above-described embodiments are implemented by that processing.

The present invention further includes the case where the program code loaded from the recording medium is written into a memory included in a function expansion board inserted in the computer or a function expansion unit connected to the computer, and after that, the functions of the above-described embodiments are implemented. That is, after the program code has been written into a memory, a CPU or the like included in the function expansion board or the function expansion unit performs part or all of the actual processing based on the instructions of the program code, and the functions are implemented by that processing.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A communication system comprising a control station (401) and a plurality of dependent stations (402,403),
wherein the control station (401) includes:
a determination means (801) for causing the dependent stations to transmit information regarding a signal received by the dependent stations, and for determining whether or not the dependent stations have received a signal transmitted from a communication apparatus of another network; and
an instruction means (801) for instructing a dependent station to change its reception sensitivity based on the result made by the determination means, and
wherein each of the dependent stations (402,403) include a notification means (908) for notifying the control station of information regarding a signal that that dependent station has received.

2. A communication apparatus (401) comprising:
a determination means (801) for determining whether or not another communication apparatus has received a signal transmitted from a communication apparatus of another network based on information that is transmitted by the another communication apparatus and that is information regarding a signal that was received by the another communication apparatus; and
an instruction means (801) for instructing the another communication apparatus to change its reception sensitivity based on the result made by the determination means.

3. A communication apparatus according to claim 2, wherein the determination means is configured to determine whether or not a signal has been received from a communication apparatus that is operated in asynchronization with the communication apparatus.

4. A communication apparatus according to claim 2 or claim 3, wherein the determination means is configured to determine whether or not the information transmitted from the another communication apparatus includes information regarding a signal transmitted from a communication apparatus that is operated in asynchronization with the communication apparatus.

5. A communication apparatus according to any of claims 2 to 4, wherein the instruction means is adapted to continue to transmit an instruction to change reception sensitivity to the another communication apparatus until the another communication apparatus does not receive a signal from the communication apparatus of another network.

6. A communication apparatus according to any of claims 2 to 5, further comprising a request means for requesting the another communication apparatus to capture a signal,
wherein the determination means is configured to determine whether or not the another communication apparatus has received a signal transmitted from a communication apparatus of another network based on information regarding a signal that is captured by the another communication apparatus in response to the request made by the request means.

7. A communication apparatus according to any of claims 2 to 6, further comprising a request means for requesting the another communication apparatus to transmit information regarding a received signal,
wherein the determination means is configured to determine whether or not the another communication apparatus has received a signal transmitted from the communication apparatus of another network based on information transmitted by the another communication apparatus in response to the request made by the request means.

8. A communication control method of a communication apparatus comprising the steps of:
determining (S1204) whether or not another communication apparatus has received a signal transmitted from a communication apparatus of another network based on information that is transmitted by the another communication apparatus and that is information regarding a signal that was received by the another communication apparatus; and
instructing (S1205) the another communication apparatus to change its reception sensitivity based on the result made in the determining step.

9. A program for causing a computer to execute the communication control method according to claim 8.

10. A storage medium storing a computer program according to claim 9.
